Europäisches Patentamt

European Patent Office

Office européen des brevets

(11) Veröffentlichungsnummer: **0 255 552**
**B1**

(12) **EUROPÄISCHE PATENTSCHRIFT**

(45) Veröffentlichungstag der Patentschrift:
**27.06.90**

(21) Anmeldenummer: **86110887.6**

(22) Anmeldetag: **06.08.86**

(51) Int. Cl.⁵: **G01B 11/16, G01B 11/02**

(54) Verfahren und Anordnung zur berührungslosen Messung von Längenänderungen an Bauteilen.

(43) Veröffentlichungstag der Anmeldung:
**10.02.88 Patentblatt 88/6**

(45) Bekanntmachung des Hinweises auf die Patenterteilung:
**27.06.90 Patentblatt 90/26**

(84) Benannte Vertragsstaaten:
**CH DE FR GB LI**

(56) Entgegenhaltungen:
**EP-A- 0 023 643**
**DE-A- 3 334 976**
**DE-A- 3 422 988**
**GB-A- 2 147 759**

(73) Patentinhaber: **CARL SCHENCK AG,**
**Landwehrstrasse 55 Postfach 40 18,**
**D-6100 Darmstadt(DE)**

(72) Erfinder: **Gernhart, Peter, Bergstrasse 1,**
**D-9763 Klingenberg(DE)**
Erfinder: **Hintz, Gerhard, Holzgasse 44,**
**D-6101 Rossdorf 1(DE)**
Erfinder: **Schneider, Peter, Taunustrasse 83,**
**D-6101 Rossdorf 1(DE)**
Erfinder: **Keller, Günter, Am Felsenkeller 47,**
**D-6101 Modautal 1(DE)**

(74) Vertreter: **Brandt, Ernst-Ulrich, Fa. Carl Schenck AG**
**Patentabteilung Landwehrstrasse 55 Postfach 40 18,**
**D-6100 Darmstadt 1(DE)**

**Beschreibung**

Die Erfindung betrifft ein Verfahren zur berührungslosen Messung von Längenänderungen an Bauteilen mit einer Laser-Lichtquelle und einer Signalverarbeitungsvorrichtung, eine Anordnung zur Durchführung des Verfahrens sowie deren Verwendung.

Aus der EP-B1 0 023 643 ist ein Verfahren zur photoelektrischen, berührungslosen Messung von mit Ortsverschiebungen verbundenen Dehnungsabläufen, insbesondere im Zugversuch, an lichtstreuenden, opaken oder transparenten Werkstoff- bzw. Objektoberflächen bekannt. Hierbei wird mittels einer Beleuchtungseinrichtung ein Beleuchtungsstrahl, z.B. ein Laserstrahl hoher Strahlungsdichte sowie mittels einer Projektionsoptik auf der Oberfläche ein Abtastfleck erzeugt. Mit Hilfe eines komplizierten Abtast- und Auswerteverfahrens wird der Dehnungsablauf rekonstruiert.

Bei einem Verfahren zur berührungslosen Ermittlung von Rundlaufabweichungen eines Rotationskörpers, z.B. eines Reifens, wird ein paralleles Strahlenbündel, z.B. eine Laser-Lichtquelle, tangential auf den rotierenden Rotationskörper gerichtet (DE-OS 3 334 976). Aus den Schwankungen der Abschattung des Strahlenbündels werden die Rundlaufabweichungen des Rotationskörpers ermittelt. Für Dehnungsmessungen ist dieses Verfahren nicht geeignet.

Bei einem weiteren Verfahren zur berührungslosen Messung der Querkontraktion von länglichen Proben ist vorgesehen, daß von einer vor der Probe angeordneten Lichtquelle mit einer Abbildungsoptik ein Lichtstrahl auf die Probe gerichtet wird, und der Lichtanteil hinter der Probe mittels Lichtempfänger gemessen wird (DE-A1 3 422 988). Dieses Verfahren erlaubt jedoch nur die Ermittlung von Längenänderungen bestimmter Meßlängen. Eine vielseitige Anwendbarkeit des Verfahrens ist daher nicht möglich.

Es ist Aufgabe der vorliegenden Erfindung, ein Verfahren der eingangs genannten Gattung derart zu gestalten, daß Längenänderungen beliebiger Meßlängen an Proben oder Prüfkörpern erfaßt werden können. Diese Aufgabe wird durch die im Patentanspruch 1 angegebenen Merkmale gelöst. Eine Anordnung zur Durchführung des Verfahrens ist in Anspruch 3 gekennzeichnet. Die abhängigen Ansprüche erfassen auch Ausgestaltungen der Erfindung.

Die Erfindung beruht auf dem Gedanken, daß die Änderung eines Blendenquerschnittes oder Spaltes die Intensität des durchfallenden Lichts ändert und daß die Intensitätsänderung als Maß für Verformungen ausgewertet werden kann. Durch die Verwendung von Blenden, deren Querschnitt oder Spalt durch die zu messende Längenänderung beeinflußbar ist, und durch die Erfassung der durch den Blendenquerschnitt beeinflußten Lichtintensität eines Strahlenbündels sowie die Erzeugung eines von der Lichtintensität abhängenden elektrischen Signals als Maß für Verformungen wird ein vielseitig verwendbares Verfahren zur Ermittlung von Längenänderungen geschaffen. Das erfindungsgemäße Verfahren arbeitet berührungsfrei, so daß keine störenden Kräfte am Prüfkörper auftreten.

Durch die Strahlaufteilung vor und die Strahladdition hinter dem Meßkörper werden Meßfehler durch die Eigenverformung der Prüfmaschine ausgeglichen bzw. vermieden.

Die Meßvorrichtung zur Durchführung des erfindungsgemäßen Verfahrens bildet kein schwingungsfähiges Feder-Masse-System, so daß exakte Messungen bis zu höchsten Prüffrequenzen und Prüfgeschwindigkeiten möglich sind. Außerdem ist der Einsatz der Prüfvorrichtung bei Versuchen mit hohen oder niedrigen Temperaturen in verschiedenen lichtdurchlässigen Umgebungsmedien möglich.

Die Erfindung wird an Ausführungsbeispielen in der Zeichnung dargestellt und in der Beschreibung näher erläutert. Es zeigen:

Fig. 1 Anordnungsschema einer erfindungsgemäßen Meßvorrichtung

Fig. 2 Vorrichtung zur Durchführung von Längsdehnungsmessungen

Fig. 2a Prüfkörper mit angeklemmter Blende

Fig. 2b Blende mit verschiedenen Spaltformen

Fig. 3 Vorrichtung zur Durchführung von Querdehnungsmessungen

Fig. 4a/b Vorrichtung zur Durchführung von Rißaufweitungsmessungen

Fig. 5 Vorrichtung zur Durchführung von Dehnungsmessungen an Öfen und Klimakammern.

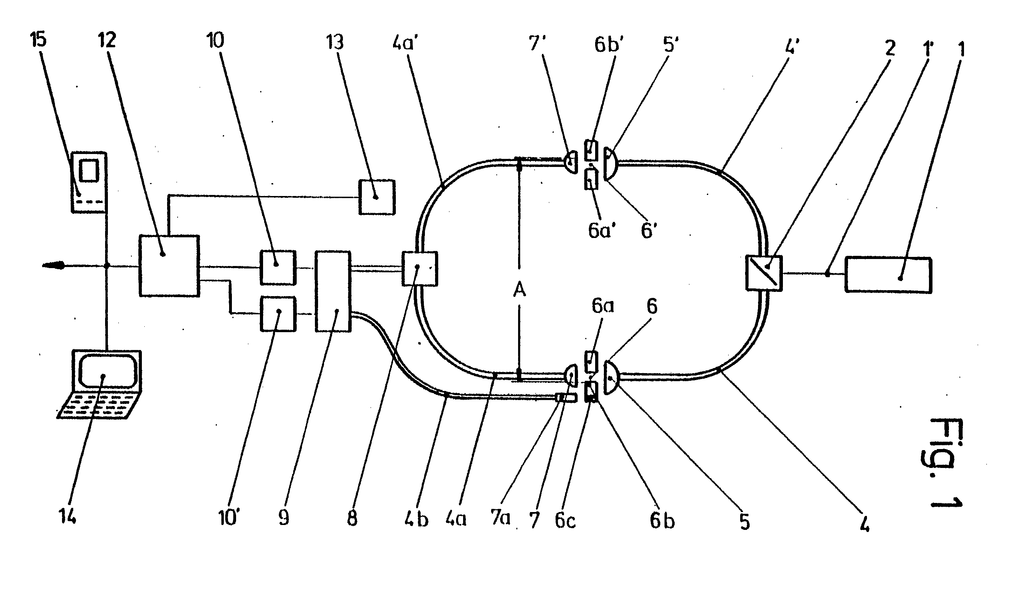

In Fig. 1 wird der Lichtstrahl l' einer Laser-Lichtquelle 1 auf einen Strahlteiler 2 gelenkt, von diesem gleichmäßig in zwei Teilstrahlen aufgeteilt und in flexible Lichtleiter 4, 4' übertragen. Am Ende der Lichtleiter 4, 4' sind Streulinsen 5, 5' angeordnet. Die Streulinsen haben die Aufgabe, die Lichtstrahlen so aufzufächern, daß die gesamte Spaltfläche von nachgeschalteten Meßspalten überdeckt wird. Als Laser-Lichtquelle und Strahlteiler können handelsübliche Bauteile verwendet werden.

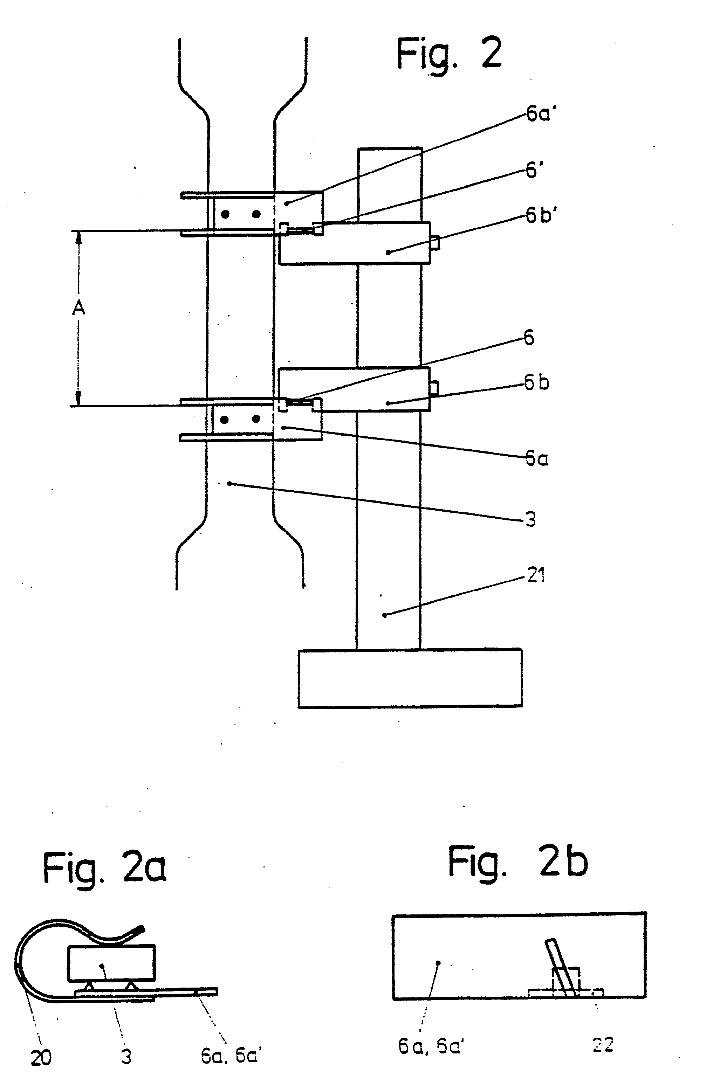

An einem in Fig. 1 nicht dargestellten Prüfkörper sind Blendenanordnungen bzw. Meßspalte 6, 6' vorgesehen, auf die das von den Streulinsen 5, 5' kommende Licht gerichtet ist. Die Meßspalte 6, 6' können z. B. gebildet werden durch mit dem Prüfkörper verbundene Blenden 6a, 6a' und durch mit einem Stativ verbundene Blenden 6b, 6b' (siehe auch Fig. 2). Diese Anordnung erlaubt die Messung der relativen Verformung zwischen zwei Punkten, wie dies in der Prüftechnik immer notwendig ist. Der Abstand A zwischen den Blenden bzw. Meßspalten kann beliebig gewählt werden. Dadurch läßt sich die Meßvorrichtung an unterschiedliche Anforderungen der Prüftechnik anpassen.

Hinter den Blendenanordnungen bzw. Meßspalten 6, 6' sind Sammellinsen 7, 7' angeordnet, die das durch die Meßspalte tretende Licht über flexible Lichtleiter 4a, 4a' einem Strahladdierer 8 zuführen. Die Lichtstrahlen werden in den Meßspalten 6, 6' den Verformungen des Prüfkörpers entsprechend abgeschattet, d. h. die Blenden- bzw. Spaltflächen und damit die durch die Spalte oder Blenden tretenden Restlichtmengen sind ein Maß für die Prüfkörperverformung.

Vom Strahladdierer 8 gelangt das Licht über ein selektives Filter 9, das nur Licht mit der Wellenlänge der Laser-Lichtquelle I passieren läßt (wodurch Fehlmessungen durch Streulicht, insbesondere bei Versuchen mit hohen Temperaturen, vermieden werden), auf ein photoelektrisches Element oder eine Fotodiode I0, in der die Lichtintensität in elektrische Signale umgewandelt wird. Diese werden einer elektronischen Auswerteschaltung oder Signalverarbeitungseinrichtung I2 zugeführt, die eine der Lichtintensität und damit der Prüfkörperverformung proportionale Spannung erzeugt. Das dehnungsproportionale elektrische Ausgangssignal der Signalverarbeitungseinrichtung kann auf einem Anzeigegerät I5 angezeigt, als Ist-Wert einem Regler (s. Pfeil) zugeführt oder in anderer Weise weiterverwendet bzw. verarbeitet werden.

Zur Kompensation von Lichtintensitätsschwankungen der Meßkette befindet sich an der Blende 6b ein Spalt mit einem definierten Querschnitt bzw. eine Referenzblende 6c. Dieser Spalt bzw. die Referenzblende wird von einer Teillichtmenge der Linse 5 durchstrahlt, in einer Sammellinse 7a gesammelt und über einen Lichtleiter 4b dem Filter 9 und einem Photosensor I0' zugeführt. Das vom Photosensor I0' erzeugte elektrische Signal wird in der Auswerteschaltung I2 mit einer Bezugsgröße verglichen. Die Abweichungen werden als Korrektursignal für den Meßwert der Photodiode I0 verwendet.

Über eine Temperaturkompensationeinrichtung I3 kann die Temperaturabhängigkeit der Meßkette korrigiert werden.

In einem Mikroprozessorsystem I4 kann das von der Meßelektronik bzw. der Signalverarbeitungseinrichtung I2 kommende elektrische Meßsignal für die Verformung in geschwindigkeits- oder beschleunigungsproportionale Signale umgewandelt werden.

In Fig. 2 ist schematisch eine Anordnung für Längsdehnungsmessungen dargestellt. An einem Bauteil oder Prüfkörper 3 sind die Blenden 6a, 6a' punktförmig mit Anpressfedern 20 befestigt (siehe Fig. 2a). Die Meßbasis A ist frei wählbar. Ein Stativ 2I, das am Prüfmaschinenrahmen befestigt ist, trägt die Blenden 6b, 6b'. Die Blenden am Prüfkörper 3 und am Stativ 2I sind so zueinander angeordnet, daß sie die Meßspalte 6, 6' bilden. Am Stativ 2I sind auch die Streu- und Sammellinsen und gegebenenfalls weitere Teile der Meßkette nach Fig. I angeordnet. Die Meßelektronik bzw. Signalverarbeitungseinrichtung kann sich auch außerhalb des Prüfraumes befinden.

Zur optimalen Anpassung der Meßeinrichtung z. B. an unterschiedliche Meßwege, kann die Blendenform unterschiedlich gestaltet werden. In Fig. 2b sind einige Spaltformen 22 für die Blenden dargestellt.

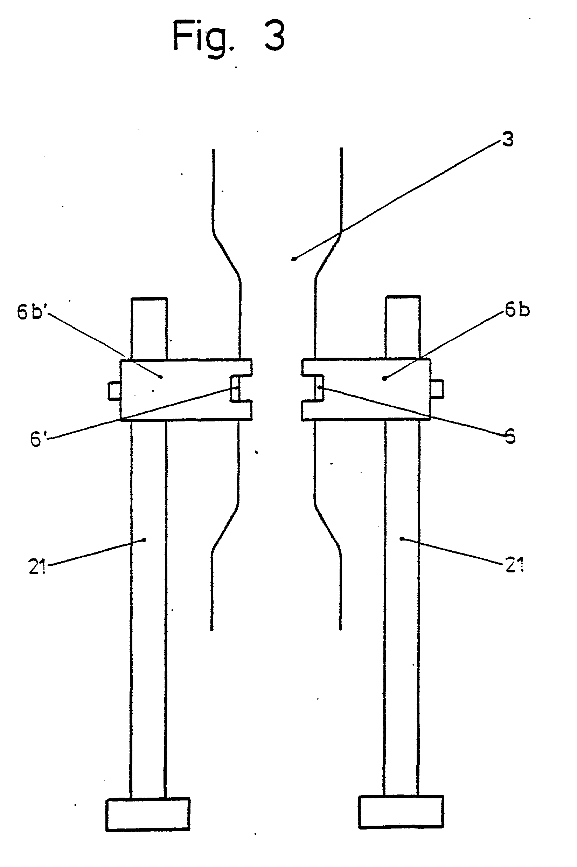

Fig. 3 zeigt eine Anordnung zur Querdehnungsmessung. Prinzipiell wird hierbei der gleiche Aufbau wie für Längsdehnungsmessungen benutzt. Die Blenden 6a, 6a' nach Fig. I werden lediglich durch die Außenkanten bzw. die Außenkontur des Prüfkörpers 3 gebildet, so daß die Meßspalte 6, 6' durch den Prüfkörper und durch die Blenden 6b, 6b' entstehen. Die übrigen Elemente der Meßkette werden analog zu den Ausführungsbeispielen nach Fig. I und 2 angeordnet.

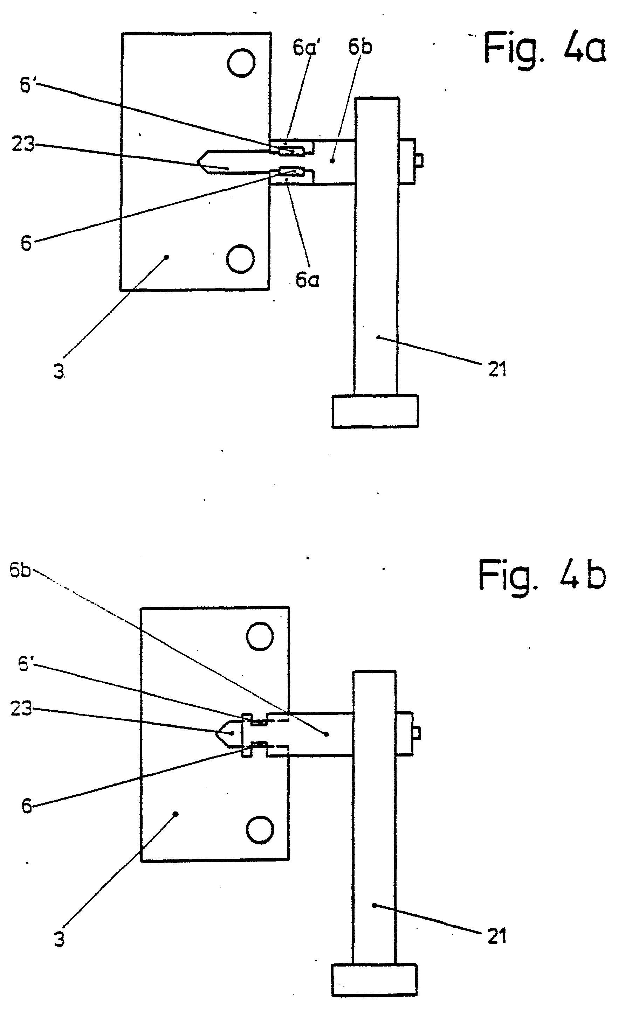

In Fig. 4a und 4b ist schematisch die Möglichkeit zur Rißaufweitungsmessung dargestellt. Die prinzipielle Meßanordnung entspricht der bei Längsdehnungsmessungen. Die Rißaufweitung kann z. B. direkt in einem Spalt 23 oder am Spaltende gemessen werden. Fig. 4a zeigt die Rißaufweitungsmessung am Spaltende mit am Prüfkörper 3 befestigten Blenden 6a, 6a' und an einem Stativ befestigten Blenden 6b, die mit den zuerst genannten Blenden die Meßspalte 6, 6' bilden. Die Aufweitungsmessung im Spalt zeigt Fig. 4b. Hierbei wird sinngemäß eine Anordnung verwendet, wie sie für Querdehnungsmessungen nach Fig. 3 dargestellt wurde, wobei die Spaltkontur einen Blendenteil bildet.

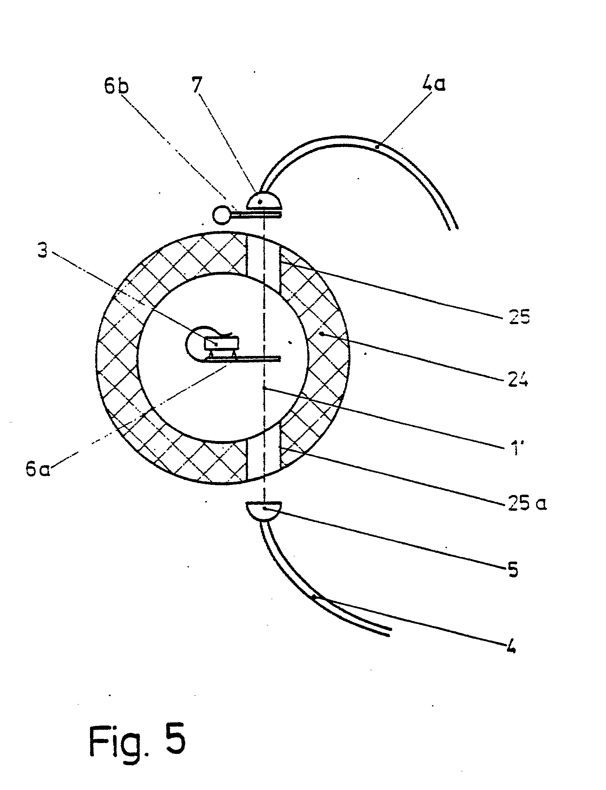

Die beschriebenen Meßanordnungen sind auch zur Dehnungsmessung in Öfen und Klimakammern verwendbar, wenn in diesen Bauteilen geeignete Fenster vorgesehen sind. In Fig. 5 ist ein Ofen 24 mit einem Prüfkörper 3 im Schnitt dargestellt. Der Ofen weist Fenster 25, 25a auf. Eine Blende 6a ist am Prüfkörper befestigt oder sie wird durch den Prüfkörper gebildet. Die Blende 6b kann innerhalb oder außerhalb des Ofens 24 angeordnet sein. Die Streu- und Sammellinsen 5 und 7 sowie die Lichtleiter 4, 4a befinden sich außerhalb des Ofens. Die Meßanordnung kann auch für Dehnungsmessungen in aggressiven oder ähnlichen Medien verwendet werden, wenn diese lichtdurchlässig sind.

**Patentansprüche**

1. Verfahren zur berührungslosen Messung von Längenänderungen an Bauteilen oder Prüfkörpern mit einer Lichtquelle (1) und einer Signalverarbeitungseinrichtung (12), wobei das Licht (1') der Lichtquelle (1) auf zwei Blenden (6a/6b, 6a'/6b') geführt wird, die in ihrer Ausgangsstellung einen vorgegebenen Abstand (A) am Bauteil oder Prüfkörper (3) definieren und deren Querschnitt oder Meßspalt (6, 6') durch die zu messende Längenänderung beeinflußbar ist, und wobei die durch den Blendenquerschnitt beeinflußte Lichtintensität erfaßt, in ein elektrisches Signal umgewandelt und als Längenänderung ausgewertet wird, dadurch gekennzeichnet, daß das Licht (1') einer Laser-Lichtquelle über einen Strahlteiler (2) auf die beiden Blenden (6a/6b, 6a'/6b') geführt wird und daß das Licht hinter den Blenden (6a/6b, 6a'/6b') in einem Strahladdierer (8) zusammengeführt wird.

2. Verfahren nach Anspruch 1, dadurch gekennzeichnet, daß das Licht (1') der Lichtquelle (1) zusätzlich auf eine Referenzblende (6c) geführt wird und daß die Lichtintensität der Referenzblende (6c) zur Korrektur von Lichtintensitätsschwankungen der Meßkette verwendet wird.

3. Anordnung zur berührungslosen Messung von Längenänderungen an Bauteilen oder Prüfkörpern, mit einer Lichtquelle und einer Signalverarbeitungseinrichtung, mit zwei Blenden (6a/6b, 6a'/6b'), die jeweils aus zwei Teilen bestehen, von denen ein Teil am Prüfkörper oder dem zu prüfenden Bauteil (3) angeordnet ist oder durch dieses Bauteil (3) ge-

bildet wird und das zweite Teil mit einem Festpunkt verbunden ist, zur Durchführung des Verfahrens nach einem der vorhergehenden Ansprüche, dadurch gekennzeichnet, daß das Licht (1') einer Laser-Lichtquelle (1) über einen Strahlteiler (2) auf jeweils eine Zerstreuungslinse (5, 5') geführt wird, daß hinter der Zerstreuungslinse (5, 5') eine der beiden Blenden (6a/6b, 6a'/6b') angeordnet ist, daß hinter der Blende (6a/6b, 6a'/6b') eine Sammellinse (7, 7') angeordnet ist und daß die Sammellinsen (7, 7') über einen Strahladdierer (8) mit einem photoelektrischen Element oder einer Fotodiode (10) verbunden sind, das bzw. die die Lichtintensität in ein elektrisches Signal umwandelt, das der Signalverarbeitungseinrichtung (12) zugeführt wird.

4. Anordnung nach Anspruch 3, dadurch gekennzeichnet, daß der Strahlteiler (2) und der Strahladdierer (8) Lichtleiter (4, 4', 4a, 4a') aufweisen.

5. Anordnung nach Anspruch 3 oder 4, dadurch gekennzeichnet, daß an einer Blende (6b) eine zusätzliche Referenzblende (6c) vorgesehen ist, deren Lichtintensität über einen Lichtleiter (4b) und ein weiteres photoelektrisches Element (10') in ein elektrisches Signal umgewandelt wird, das der Signalverarbeitungseinrichtung (12) zugeleitet und mit einem Bezugssignal verglichen wird, und daß die Differenz zwischen dem elektrischen Signal und dem Bezugssignal als Korrekturgröße verwendet wird.

6. Anordnung nach einem der Ansprüche 3 bis 5, dadurch gekennzeichnet, daß vor dem photoelektrischen Element (10) ein Filter (9) angeordnet ist.

7. Anordnung nach einem der Ansprüche 3 bis 6, gekennzeichnet durch eine Einrichtung (13) zur Temperaturkompensation, die mit der Signalverarbeitungseinrichtung (12) verbunden ist.

8. Anordnung nach einem der Ansprüche 3 bis 7, dadurch gekennzeichnet, daß die Blende (6a/6b, 6a'/6b') unterschiedliche Spaltformen (22) aufweist.

9. Verwendung einer Anordnung nach einem der Ansprüche 3 bis 8 zur Längsdehnungsmessung, Querdehnungsmessung, Rißaufweitungsmessung und Dehnungsmessung in Öfen und Klimakammern sowie zur Messung von Verformungsgeschwindigkeiten.

**Revendications**

1. Procédé pour la mesure sans contact de modifications de longueur de pièces ou d'éprouvettes, comprenant une source de lumière (1) et un dispositif de traitement de signaux (12), la lumière (1') provenant de la source de lumière (1) étant dirigée sur deux écrans (6a/6b, 6a'/6b') qui définissent dans leur position de sortie une distance prédéterminée (A) par rapport à la pièce ou à l'éprouvette (3) et dont la section ou la fente de mesure (6, 6') peut être influencée par la modification de longueur à mesurer, et dans lequel l'intensité lumineuse qui est influencée par la section des écrans est détectée, convertie en un signal électrique et évaluée en tant que modification de longueur, caractérisé en ce que la lumière (1') provenant d'une source de lumière laser et dirigée par l'intermédiaire d'un diviseur de faisceau (2) sur les deux écrans (6a/6b, 6a'/6b'), et en ce que la lumière à l'arrière des écrans (6a/6b, 6a'/6b') est rassemblée dans un additionneur de faisceaux (8).

2. Procédé selon la revendication 1, caractérisé en ce que la lumière (1') de la source lumineuse (1) est dirigée en outre sur un écran de référence (6c) et en ce que l'intensité de la lumière de l'écran de référence (6c) est utilisée pour corriger des fluctuations d'intensité lumineuse de la chaîne de mesure.

3. Agencement pour la mesure sans contact de modifications de longueur de pièces ou d'éprouvettes, comprenant une source de lumière et un dispositif de traitement de signaux, avec deux écrans (6a/6b, 6a'/6b') qui sont respectivement constitués en deux parties, dont une partie est disposée sur l'éprouvette ou sur la pièce soumise à l'essai (3) ou est constitué par cette pièce (3), et la seconde partie est reliée à un point fixe, pour la mise en œuvre du procédé selon l'une quelconque des revendications précédentes, caractérisé en ce que la lumière (1') provenant d'une source de lumière laser (1) est dirigée par l'intermédiaire d'un diviseur de faisceau (2) respectivement sur une lentille divergente (5, 5'), en ce que l'un des deux écrans (6a/6b, 6a'/6b') est disposé à l'arrière de la lentille divergente (5, 5'), en ce qu'à l'arrière des écrans (6a/6b, 6a'/6b') est disposée une lentille convergente (7, 7') et en ce que les lentilles convergentes (7, 7') sont reliées à un élément photoélectrique ou à une photodiode (10) par l'intermédiaire d'un additionneur de faisceaux (8), qui convertit l'intensité lumineuse en un signal électrique appliqué à un dispositif de traitement de signaux (12).

4. Agencement selon la revendication 3, caractérisé en ce que le diviseur de faisceau (2) et l'additionneur de faisceaux (8) comprennent des guides de lumière (4, 4', 4a, 4a').

5. Agencement selon la revendication 3 ou 4, caractérisé en ce qu'un écran de référence additionnel (6c) est prévu sur un écran (6b), dont l'intensité lumineuse est convertie par l'intermédiaire d'un guide de lumière (4b) et d'un autre élément photoélectrique (10') en un signal électrique qui est appliqué au dispositif de traitement de signaux (12) et comparé à un signal de référence, et en ce que la différence entre le signal électrique et le signal de référence est utilisée en tant que grandeur de correction.

6. Agencement selon l'une quelconque des revendications 3 à 5, caractérisé en ce qu'un filtre (9) est monté en amont de l'élément photoélectrique (10).

7. Agencement selon l'une quelconque des revendications 3 à 6, caractérisé par un dispositif (13) de compensation de la température, qui est relié au dispositif de traitement de signaux (12).

8. Agencement selon l'une quelconque des revendications 3 à 7, caractérisé en ce que les écrans (6a/6b, 6a'/6b') présentent des formes de fente (22) qui sont différentes.

9. Utilisation d'un agencement selon l'une quelconque des revendications 3 à 8 pour une mesure de dilatation longitudinale, une mesure de dilatation transversale, une mesure d'élargissement de fissure et une mesure de dilatation dans des fours ou

des chambres de climatisation, ainsi que pour la mesure de la vitesse de déformation.

## Claims

1. Method for the contactless measurement of changes in length on structural units or test pieces by means of a light source (1) and a signal processing device (12), the light (1') from the light source (1) being directed onto two diaphragms (6a/6b, 6a'/6b'), which in their original position define a predetermined spacing (A) at the structural unit or test piece (3) and the cross section or measuring aperture (6, 6') of which can be influenced by the change in length to be measured, and the light intensity, which is influenced by the diaphragm cross section, being determined, converted into an electrical signal and evaluated as a change in length, characterised in that the light (1') from a laser light source is directed by way of a beam splitter (2) onto the two diaphragms (6a/6b, 6a'/6b'), and that the light is brought together behind the diaphragms (6a/6b, 6a'/6b') in a beam adder (8).

2. Method according to claim 1, characterised in that the light (1') from the light source (1) is additionally directed onto a reference diaphragm (6c), and that the light intensity of the reference diaphragm (6c) is used to correct light intensity of the reference diaphragm (6c) is used to correct light intensity variations in the measuring chain.

3. Arrangement for the contactless measurement of changes in length on structural units or test pieces, comprising a light source and a signal processing device, two diaphragms (6a/6b, 6a'/6b'), which in each case consist of two parts, one part of which is arranged on the test piece or the structural unit (3) to be tested or is formed by this structural unit (3) and the second part is connected to a fixed point, for carrying out the method according to one of the preceding claims, characterised in that the light (1') from a laser light source (1) is directed via a beam splitter (2) onto a respective divergent lens (5, 5'), that one of the two diaphragms (6a/6b, 6a'/6b') is arranged behind the divergent lens (5, 5'), that a convergent lens (7, 7') is arranged behind the diaphragm (6a/6b, 6a'/6b'), and that the convergent lenses (7, 7') are connected via a beam adder (8) to a photoelectric component or a photodiode (10), which converts the light intensity into an electrical signal, which is fed to the signal processing device (12).

4. Arrangement according to claim 3, characterised in that the beam splitter (2) and the beam adder (8) comprise light guides (4, 4', 4a, 4a').

5. Arrangement according to claim 3 or 4, characterised in that an additional reference diaphragm (6c) is provided at one diaphragm (6b), the light intensity of which is converted via a light guide (4b) and a further photoelectric component (10') into an electrical signal, which is fed to the signal processing device (12) and compared with a reference signal, and that the difference between the electrical signal and the reference signal is used as a correction value.

6. Arrangement according to one of claims 3 to 5, characterised in that a filter (9) is arranged in front of the photoelectric component (10).

7. Arrangement according to one of claims 3 to 6, characterised by a temperature compensation device (13), which is connected to the signal processing device (12).

8. Arrangement according to one of claims 3 to 7, characterised in that the diaphragm (6a/6b, 6a'/6b') has different aperture shapes (22).

9. Use of an arrangement according to one of claims 3 to 8 for measuring linear extension, transverse extension, crack expansion and extension in furnaces and climatic chambers, as well as for measuring deformation speeds.

Fig. 1

Fig. 2

Fig. 2a

Fig. 2b

# Fig. 3

Fig. 4a

Fig. 4b

Fig. 5